# EUROPEAN PATENT SPECIFICATION

(11) **EP 0 283 132 B1**
(45) Date of publication and mention of the grant of the patent: **12.05.1993**
(21) Application number: 88301290.8
(22) Date of filing: 17.02.1988
(51) Int. Cl.: H01B 7/34, H01B 7/28

(54) **Mineral insulated electric cables**
Mit mineralischem Material isolierte elektrische Kabel
Câbles électriques isolés au moyen d'une matière minérale

(30) Priority: 18.03.1987 GB 8706459
(43) Date of publication of application: 21.09.1988
(73) Proprietor: ASSOCIATED ELECTRICAL INDUSTRIES LIMITED, London W1A 1EH (GB)
(72) Inventor: Powell, Robert John Wale, Wembley Middlesex (GB); Johnson, Oliver Sanders, Northfleet Gravesend Kent DA11 8BP (GB)
(74) Representative: Pope, Michael Bertram Wingate

(56) References cited:
- EP-A- 0 183 923
- DE-A- 2 242 455
- DE-A- 2 837 367
- GB-A- 2 106 307

## Description

This invention relates to mineral insulated electric cables, that is to say cables of the type comprising one or more electrical conductor wires enclosed within a tubular metal sheath and insulated from the sheath by a filling of compacted powdered inorganic insulating material, such as magnesium oxide.

It will be understood that the term 'mineral insulated electric cables' includes, in addition to wiring cables for the conduction of electric current for general purposes, cables of the construction described above and employed for other purposes, for example sensing cables, heating cables (including sheathed wired heating elements) and thermocouple cables. The invention also includes within its scope the manufacture of such cables. In some cases such mineral insulated electric cables incorporate within the powdered insulating material a quantity of a hydrophobic substance, that is to say, a water-repellent substance effective to reduce moisture penetration. Thus, it is known from GB 2,106,307B to impregnate the powdered insulating material with a silicone in liquid form. A silicone may alternatively be dispersed within the insulating material in powdered form as disclosed in GB 2,106,701B. Other hydrophobic materials have also been proposed for such a purpose.

However it has been found that in some mineral insulated electric cables incorporating a hydrophobic substance the cables are less able to withstand a high voltage when subjected to high temperatures for prolonged periods, as may occur in the case of fires.

It is an object of this invention to provide a mineral insulated cable of the kind incorporating a hydrophobic substance which is less subject to this disadvantage.

In accordance with one aspect of the invention a mineral insulated electric cable of the kind comprising one or more electrical conductor wires enclosed within a tubular metal sheath, and insulated from the sheath by a filling of compacted powdered inorganic insulating material incorporating a hydrophobic substance in the form of a carbon-containing compound, is characterised in that it also has, within the sheath, an additive material which releases carbon dioxide on heating above a predetermined temperature. It is believed that this carbon dioxide then reacting with free carbon produced in the cable, forming carbon monoxide.

In accordance with a second aspect of the invention a mineral insulated electric cable of the kind comprising a mineral insulated electric cable comprising one or more electrical conductor wires enclosed within a tubular metal sheath, and insulated from the sheath by a filling of compacted powdered inorganic insulating material incorporating a hydrophobic substance in the form of a carbon-containing compound, is characterised in that it has, within the sheath, an additive material which reacts with the hydrophobic material or degradation product thereof to limit the production of free carbon. The additive material may give rise to the production of oxygen, which then reacts with any carbon resulting from the decomposition of the hydrophobic material, so as to oxidise the carbon.

Reactions with the hydrophobic material during the annealing process, to which the cable is subject during production, may have the beneficial effect of further polymerising and cross-linking the hydrophobic material.

It has been found that the inclusion of either or both forms of additives has the effect of preventing or limiting the reduction of the breakdown voltage at high temperatures.

The reactive additive material in accordance with the second aspect of the invention may be an oxide, such as manganese dioxide (MnO₂), manganic oxide (Mn₂O₃), mangano-manganic oxide (Mn₃O₄), vanadium dioxide (VO₂), vanadium pentoxide (V₂O₅), molybdenum oxide (MoO₃), copper oxide (CuO) or tungsten oxide (WO₃). Other transition metal oxides may be used. Such oxides are particularly suitable for use in cables incorporating a silicone as the hydrophobic substance. In this case, the oxide acts as an oxidising agent on the silicones and their degradation products. At high temperatures, silicones decompose producing carbon. The oxides are sufficiently active to oxidise this carbon to carbon dioxide or carbon monoxide. However the oxides chosen are not sufficiently active as to destroy the silicone at working temperatures.

Other oxidising agents which may be used include certain chromates, molybdates and tungstates.

The carbon-dioxide producing additive material used may be a carbonate such as magnesium carbonate (MgCO₃), calcium carbonate (CaCO₃), strontium carbonate (SrCO₃) and barium carbonate (BaCO₃). These substances react at high temperatures to produce carbon dioxide thus improving the heat resistance of the cable.

Mixtures of carbonates, tungstates, molybdates, chromates and oxides may also be incorporated in the cable.

It was found that only a relatively small proportion of either or both additive materials, compared with the total weight of the filling material, that is to say the powdered insulating material together with the additive, was needed to provide an effective heat and flame resistance up to temperatures of the order of 1040°C.

The composition of the filling materials tested included from 5¼% to 1/8% by weight of a single component of the additive materials and from 1% to ¼% by weight of mixtures of said additive materials. In all tests, ¼% by weight of silicone was added to the mineral insulating material.

One example of a cable according to the invention has, mixed in with the magnesium oxide, approximately ¼% by weight each of polymethylsiloxane, strontium carbonate and manganic oxide. The quantities of the strontium carbonate and manganic oxide specified are variable in the range 0.1% to 5.0%.

In tests, it was found that cables in accordance with this invention passed the British Standards 6387 fire test, withstanding heating at temperatures up to 1040°C for 3 hours with a voltage of 600V applied to the cable.

Preferably, the carbon-dioxide producing and/or other reactive additive material is either dispersed within the mineral insulating material or consists of a layer of the material on the interior of the sheath or on at least one of the conductors.

It has been found that the presence of the additives described has no deleterious effects on the other properties of the cable. In particular, tests have shown no diminution in the hydrophobic characteristics provided by silicones as described in GB 2106307B. These beneficial properties are preserved after long periods of use at elevated temperatures which simulate many years of service life at normal operating temperatures.

The additive chosen for the cable must be compatible with the high temperature annealing techniques and with the particular hydrophobic agent used.

If the conductors or sheaths are formed from copper, the surface of the copper can be oxidised to form an oxidising agent layer. Alternatively, they may be coated with a metal which is then oxidised to form a layer of oxidising agent.

## Claims

1. A mineral insulated electric cable comprising one or more electrical conductor wires enclosed within a tubular metal sheath, and insulated from the sheath by a filling of compacted powdered inorganic insulating material incorporating a hydrophobic substance in the form of a carbon-containing compound, characterised in that it also has, within the sheath, an additive material which releases carbon dioxide on heating above a predetermined temperature.

2. A mineral insulated electric cable as claimed in Claim 1 characterised in that the additive material is a carbonate.

3. A mineral insulated electric cable as claimed in Claim 2 characterised in that the carbonate is magnesium carbonate, calcium carbonate, strontium carbonate or barium carbonate.

4. A mineral insulated electric cable comprising one or more electrical conductor wires enclosed within a tubular metal sheath, and insulated from the sheath by a filling of compacted powdered inorganic insulating material incorporating a hydrophobic substance in the form of a carbon-containing compound, characterised in that it has, within the sheath, an additive material which reacts either with the hydrophobic material or a degradation product thereof to limit the production of free carbon.

5. A mineral insulated electric cable according to Claim 4 characterised in that the additive material reacts to produce oxygen.

6. A mineral insulated cable as claimed in Claims 4 or 5 characterised in that said additive material is a chromate, a molybdate or a tungstate.

7. A mineral insulated electric cable as claimed in Claims 4 or 5 characterised in that said additive material is an oxide.

8. A mineral insulated electric cable as claimed in Claim 7 characterised in that said oxide is manganic oxide, manganese dioxide, mangano-manganic oxide, vanadium dioxide, vanadium pentoxide, molybdenum oxide, copper oxide or tungsten oxide.

9. The manufacture of mineral insulated electric cables as claimed in any preceding claim characterised in that the additive material is dispersed within the mineral insulating material, or consists of a layer of the material on the interior of the sheath or on at least one of the conductors.

## Patentansprüche

1. Ein mineralisoliertes Elektrokabel mit einem oder mehreren elektrischen Leitungsdrähten, die innerhalb eines rohrförmigen Metallmantels eingeschlossen und von dem Mantel durch eine Füllung aus verdichtetem, pulverförmigem, anorganischem Isoliermaterial isoliert sind, das einen wasserabweisenden Stoff in der Form einer Kohlenstoffverbindung enthält, dadurch gekennzeichnet, daß es innerhalb des Mantels auch ein Zusatzmaterial enthält, das bei Erhitzung oberhalb einer vorbestimmten Temperatur Kohlendioxid abgibt.

2. Ein mineralisoliertes Elektrokabel nach Anspruch 1, dadurch gekennzeichnet, daß das Zusatzmaterial ein Karbonat ist.

3. Ein mineralisoliertes Elektrokabel nach Anspruch 2, dadurch gekennzeichnet, daß das Karbonat Magnesiumkarbonat, Kalziumkarbonat, Strontiumkarbonat oder Bariumkarbonat ist.

4. Ein mineralisoliertes Elektrokabel mit einem oder mehreren elektrischen Leitungsdrähten, die innerhalb eines rohrförmigen Metallmantels eingeschlossen und von dem Mantel durch eine Füllung aus verdichtetem, pulverförmigem, anorganischem Isoliermaterial isoliert sind, das einen wasserabweisenden Stoff in der Form einer Kohlenstoffverbindung enthält, dadurch gekennzeichnet, daß es innerhalb des Mantels ein Zusatzmaterial enthält, das entweder mit dem wasserabweisenden Stoff oder einem Abbauprodukt davon reagiert, so daß die Produktion von freiem Kohlenstoff begrenzt wird.

5. Ein mineralisoliertes Elektrokabel nach Anspruch 4, dadurch gekennzeichnet, daß das Zusatzmaterial so reagiert, daß Sauerstoff produziert wird.

6. Ein mineralisoliertes Elektrokabel nach den Ansprüchen 4 oder 5, dadurch gekennzeichnet, daß das besagte Zusatzmaterial ein Chromat, ein Molybdat oder ein Wolframat ist.

7. Ein mineralisoliertes Elektrokabel nach den Ansprüchen 4 oder 5, dadurch gekennzeichnet, daß das besagte Zusatzmaterial ein Oxid ist.

8. Ein mineralisoliertes Elektrokabel nach Anspruch 7, dadurch gekennzeichnet, daß das besagte Oxid Dimangantrioxid, Mangandioxid, Trimangantetroxid, Vanadiumdioxid, Vanadiumpentoxid, Molybdänoxid, Kupferoxid oder Wolframoxid ist.

9. Die Herstellung von mineralisoliertem Elektrokabel nach einem der vorstehenden Ansprüche, dadurch gekennzeichnet, daß das Zusatzmaterial innerhalb des mineralischen Isoliermaterials dispergiert ist oder aus einer an der Innenwand des Mantels oder an mindestens einem der Leitungsdrähte befindlichen Schicht des Materials besteht.

## Revendications

1. Câble électrique à isolant minéral, comprenant un ou plusieurs fils métalliques conducteurs de l'électricité enfermés dans une gaine métallique tubulaire et isolés par rapport à la gaine par une garniture d'une matière minérale isolante en poudre tassée contenant une substance hydrophobe sous forme d'un composé contenant du carbone, caractérisé en ce qu'il contient aussi, dans la gaine, un matériau adjuvant qui dégage de l'anhydride carbonique par chauffage au-dessus d'une température prédéterminée.

2. Câble électrique à isolant minéral selon la revendication 1, caractérisé en ce que le matériau adjuvant est un carbonate.

3. Câble électrique à isolant minéral selon la revendication 2, caractérisé en ce que le carbonate est le carbonate de magnésium, de calcium, de strontium ou de baryum.

4. Câble électrique à isolant minéral comprenant un ou plusieurs fils métalliques conducteurs de l'électricité enfermés dans une gaine métallique tubulaire et isolés par rapport à la gaine par une garniture d'une matière minérale en poudre tassée contenant une substance hydrophobe sous forme d'un composé contenant du carbone, caractérisé en ce qu'il contient, à l'intérieur de la gaine, un matériau adjuvant qui réagit avec la matière hydrophobe ou avec un produit de dégradation de celle-ci en limitant la production de carbone libre.

5. Câble électrique à isolant minéral selon la revendication 4, caractérisé en ce que le matériau adjuvant réagit en formant de l'oxygène.

6. Câble électrique à isolant minéral selon la revendication 4 ou 5, caractérisé en ce que le matériau adjuvant est un chromate, un molybdate ou un tungstate.

7. Câble électrique à isolant minéral selon la revendication 4 ou 5, caractérisé en ce que le matériau adjuvant est un oxyde.

8. Câble électrique à isolant minéral selon la revendication 7, caractérisé en ce que l'oxyde est l'oxyde manganique, le bioxyde de manganèse, l'oxyde manganomanganique, le bioxyde de vanadium, le pentoxyde de vanadium, l'oxyde de molybdène, l'oxyde de cuivre ou l'oxyde de tungstène.

9. Procédé de fabrication de câbles électriques à isolant minéral selon l'une quelconque des revendications précédentes, caractérisé en ce que le matériau adjuvant est dispersé dans le matériau isolant minéral ou est formé d'une couche du matériau disposée à l'intérieur de la gaine ou sur l'un au moins des conducteurs.
